# EUROPEAN PATENT SPECIFICATION

(11) **EP 2 571 294 B1**
(45) Date of publication and mention of the grant of the patent: **27.02.2019**
(21) Application number: 11780201.7
(22) Date of filing: 11.05.2011
(51) Int. Cl.: H04W 4/08, H04W 4/06, H04W 4/70, H04W 4/021

(54) **METHOD, DEVICE AND SYSTEM FOR UPDATING LOCATION INFORMATION**
VERFAHREN, VORRICHTUNG UND SYSTEM ZUR AKTUALISIERUNG VON STANDORTINFORMATIONEN
PROCÉDÉ, DISPOSITIF ET SYSTÈME PERMETTANT DE METTRE À JOUR DES INFORMATIONS DE LOCALISATION

(30) Priority: 11.05.2010 CN 201010178397
(43) Date of publication of application: 20.03.2013
(73) Proprietor: Huawei Technologies Co., Ltd., Longgang District Shenzhen, Guangdong 518129 (CN)
(72) Inventor: QIN, Jun, Shenzhen Guangdong 518129 (CN); SHU, Bing, Shenzhen Guangdong 518129 (CN)
(74) Representative: Körber, Martin Hans
(86) International application number: PCT/CN2011/073933
(87) International publication number: WO 2011/140980

(56) References cited:
- CN-A- 101 013 947
- CN-A- 101 268 678
- CN-A- 101 577 949
- KPN ET AL: "Key Issue - Location Specific Trigger", 3GPP DRAFT; S2-100096_MTC DEVICE TRIGGERING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 12 January 2010 (2010-01-12), XP050432724, [retrieved on 2010-01-12]
- "3 rd Generation Partnership Project; Technical Specification Group Services and System Aspects; System Improvements for Machine-Type Communications; (Release 10)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.3.2, 22 March 2010 (2010-03-22), pages 1-33, XP050401986, [retrieved on 2010-03-22]
- "3rd Generation Partnership Project; Technical Specification Group Core Network and Terminals; Technical realization of Cell Broadcast Service (CBS) (Release 9)", 3GPP STANDARD; 3GPP TS 23.041, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.0, 31 March 2010 (2010-03-31), pages 1-46, XP050402171, [retrieved on 2010-03-31]

## Description

### TECHNICAL FIELD

The present invention relates to the field of communication technology, and more specifically, to a method, apparatus and system for updating location information.

### BACKGROUND

Currently, CBS (Cell Broadcast Service) employs CBCH (Cell Broadcast Channel) to broadcast messages to be broadcasted to terminals covered in a network coverage area, so that those terminals can directly receive corresponding information.

Currently, for M2M (Machine to Machine) services involving a large number of terminals, there are many demands for providing services using CBS. For example, it may be required to send messages to specific terminals or groups through cell broadcast, to activate those terminals, and enable those terminals or groups to establish links to networks. However, current CBC (Cell Broadcast Center) is unable to broadcast to groups.

KPN ET AL: "Key Issue - Location Specific Trigger", 3GPP DRAFT; S2-100096_MTC DEVICE TRIGGERING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. Shenzhen; 20100118, 12 January 2010 (2010-01-12), XP050432724 as well as "3rd Generation Partnership Project; Technical Specification Group Services and System Aspects; System Improvements for Machine-Type Communications; (Release 10)", 3GPP STANDARD; 3GPP TR 23.888, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. VO.3.2, 22 March 2010 (2010-03-22), pages 1-33, XP050401986 disclose a method for updating location information with the features of the preamble of claim 1.

### SUMMARY

A method, apparatus and system for updating location information are provided in embodiments of the present invention.

A method for updating location information, wherein the method is used for a communication system employing cell broadcast service and the communication system comprises a cell broadcast center, the method including: a first network apparatus receives a first message which indicates an update for the terminal location information of a terminal or indicates an update for the group location information of the group where the terminal is located; according to the first message, the first network apparatus acquires the group location information of the group where the terminal is located; the first network apparatus sends the group location information of the group where the terminal is located, to the cell broadcast center such

that the cell broadcast center indicates a base station subsystem corresponding to the group where the terminal is located to transmit a broadcast in a cell corresponding to the group where the terminal is located according to the group location information of the group where the terminal is located; wherein the group location information comprises one of a cell information list, a location area information list and a route area information list.

A first network apparatus, including: a receiving unit, for receiving a first message which indicates an update for the terminal location information of a terminal or indicates an update for the group location information of the group where the terminal is located; a group location information acquiring unit, for according to the first message, acquiring the group location information of the group where the terminal is located, wherein the group location information comprises one of a cell information list, a location area list, and a routing area information list; a sending unit, for sending the group location information of the group where the terminal is located, to the cell broadcast center, such that the cell broadcast center indicates a base station subsystem corresponding to the group where the terminal is located to transmit a broadcast in a cell corresponding to the group where the terminal is located according to the group location information of the group where the terminal is located.

A communication system, the communication system comprises a cell broadcast center, the cell broadcast center is used for: sending a first querying message containing a group identification information and a querying identification information indicating the querying to the group location information of the group corresponding to the group identification, wherein the group location information comprises one of a cell information list, a location area list, and a routing area information list; corresponding to sending the first querying message, receiving the group location information of the group corresponding to the group identification.

According to the communication system, a querying flag is further used for indicating to query the terminal list of the group which the group identification corresponds to;
the cell broadcast center is further configured to send a second querying message including the group identification information and the querying identification information indicating to query the terminal list of the group the group identification information corresponds to; corresponding to sending the second querying message, the cell broadcast center is further configured to receive the terminal list of the group corresponding to the group identification.

According to the communication system the first network apparatus further configured to receive the second querying message; and according to the querying identification information indicating to query the terminal list of the group which the group identification corresponds to in the second querying message, send the terminal list of the group which the group identification corresponds to.

A cell broadcast center, including: a sending unit, for sending to a first network apparatus a first querying message containing group identification information and querying identification information indicating the querying to the group location information of the group corresponding to the group identification, wherein the group identification information identifies a group where a terminal is located, wherein the group location information comprises one of a cell information list, a location area
list, and a routing area information list; a receiving unit, for corresponding to sending the first querying message, receiving the group location information of the group corresponding to the group identification, wherein the cell broadcast center indicates a base station subsystem corresponding to the group where the terminal is located to transmit a broadcast in a cell corresponding to the group where the terminal is located according to the group location information of the group where the terminal is located.

A first network apparatus, including: a receiving unit, for receiving from a cell broadcast center a first querying message containing group identification information and querying identification information indicating the querying to the group location information of the group corresponding to the group identification, wherein the group identification information identifies a group where a terminal is located, wherein the group location information comprises one of a cell information list, a location area list, and a routing area information list; a sending unit, for according to the querying identification information indicating the querying to the group location information of the group corresponding to the group identification in the first querying message, sending the group location information of the group corresponding to the group identification to the cell broadcast center, such that the cell broadcast center indicates a base station subsystem corresponding to the group where the terminal is located to transmit a broadcast in a cell corresponding to the group where the terminal is located according to the group location information of the group where the terminal is located.

Through the above embodiments, the CBC can implement broadcast to groups.

### BRIEF DESCRIPTION OF THE DRAWINGS

Fig.1 illustrates a schematic diagram of a communication system in an embodiment of the present invention.
Fig.2a illustrates a schematic diagram of a method for updating location information in an embodiment of the present invention.
Fig.2b illustrates a schematic diagram of a method for updating location information in another embodiment of the present invention.
Fig.3a illustrates a schematic diagram of a method for updating location information in another embodiment of the present invention.
Fig.3b illustrates a schematic diagram of a method for updating location information in another embodiment of the present invention.
Fig.4 illustrates a schematic diagram of a method for updating location information in still another embodiment of the present invention.
Fig.5 illustrates a schematic diagram of a method for updating location information in yet another embodiment of the present invention.
Fig.6 illustrates a schematic diagram of units of a first network apparatus in an embodiment of the present invention.
Fig.7 illustrates a schematic diagram of a communication system in an embodiment of the present invention.
Fig.8 illustrates a schematic diagram of a communication system in yet another embodiment of the present invention.
Fig.9 illustrates the usage of a cell broadcast center in an embodiment of the present invention.
Fig. 10 illustrates the usage of a first network apparatus in an embodiment of the present invention.

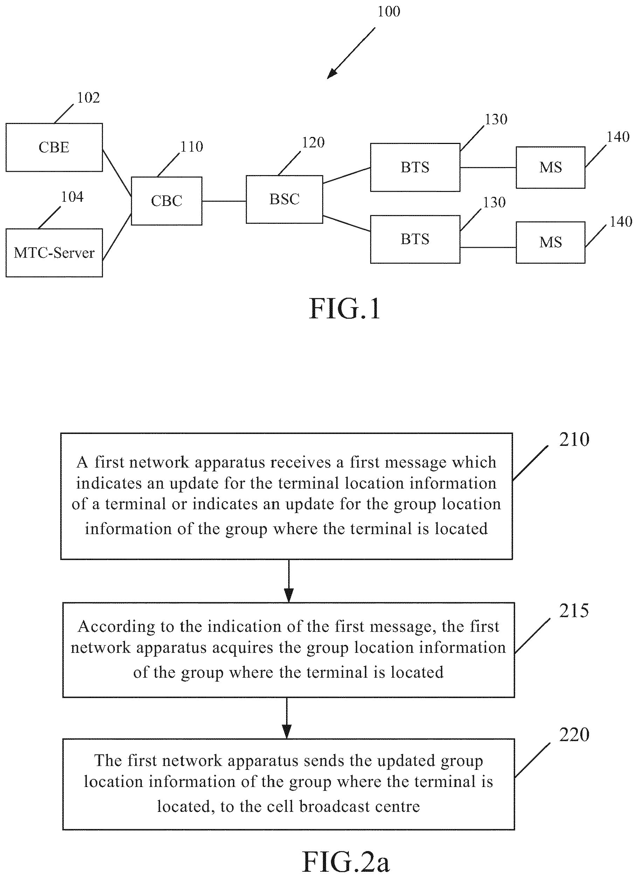

Fig.1 1 illustrates a schematic diagram of a communication system in still another embodiment of the present invention.

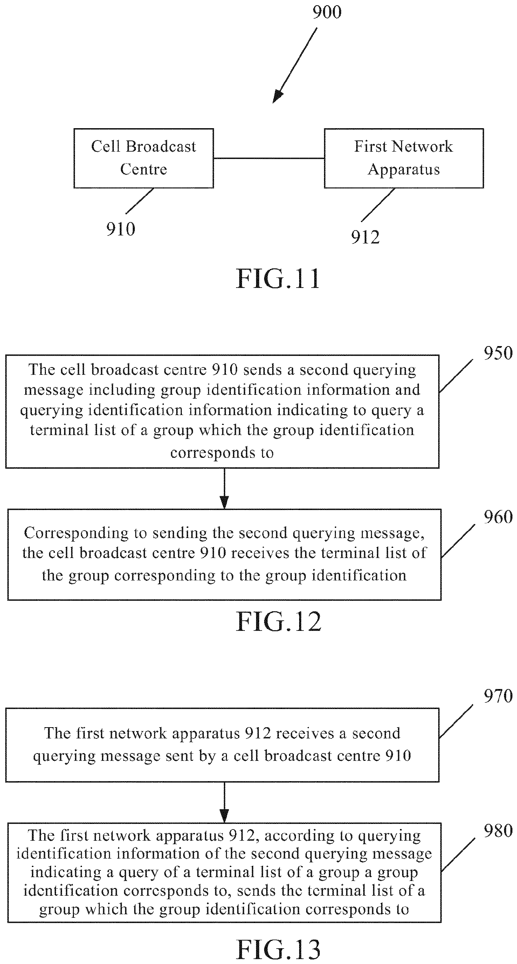

Fig. 12 illustrates the usage of a cell broadcast center in yet another embodiment of the present invention.
Fig.13 illustrates the usage of a first network apparatus in yet another embodiment of the present invention.

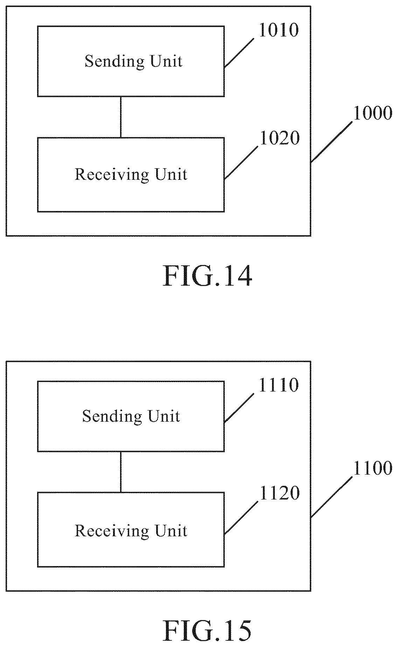

Fig.14 illustrates a schematic diagram of units of a cell broadcast center in an embodiment of the present invention.
Fig. 15 illustrates a schematic diagram of units of a first network apparatus in an embodiment of the present invention.

### DETAILED DESCRIPTION

Fig.1 illustrates a communication system 100 in an embodiment of the present invention. The communication system 100 comprises a CBE (Cell Broadcast Entry) 102, a MTC-Server (Machine Type Communication Server) 104, a CBC (Cell Broadcast Center) 110, a BSC (Base Station Controller) 120, BTSs (Base Transceiver Station) 130, MSs (Mobile Station) 140. In the embodiments of the present invention, the MSs are also referred to as terminals.

In the communication system 100, a MS 140 can receive/transmit wireless signals from/to a wireless communication deice or network. For example, the MS 140 can be a radio device, a cellular telephone device, a computing device, a personal communication system device, or any other devices equipped with wireless communication devices.

The CBC 110 can be connected to one or more BSCs 120, while a BSC 120 is generally connected to one CBC 110. The BSC 120 and the BTS 130 can be collectively referred to a BS (Base Station) subsystem.

The CBE 102 or the MTC-Server 104 can send a cell broadcast message to the CBC 110, the cell broadcast message can be broadcasted to terminals or a group of terminals. After receiving the cell broadcast message, the CBC 110, can indicates the BS subsystem to transmit a cell broadcast in a cell corresponding to the location information by determining location information of corresponding terminals or group.

In order to determine location information of terminals or a group, the CBC 110 can pre-store information of mapping between terminals and terminal positions, or store information of mapping between groups and group location information. Location information of a terminal can be referred to as terminal location information, which can be one or more of cell information, location area information, and routing area information of the terminal. A collection of location information of terminals in a group can be referred to as group location information, which can be one or more of a cell information list, location area list, and a routing area list. Information of the pre-stored mapping information can be pre-configured or can be set by, e.g. data importing.

In another embodiment of the present invention, the CBC 110 can, after receiving a request message carrying with a terminal identification or a group identification, query a network element, on which terminal location information or group location information is stored, about location information, to acquire corresponding location information. For example, the CBC 110 queries itself or sends a location information querying request to a MSC/VLR, HLR or SGSN, to acquire terminal location information or group location information.

In another embodiment of the present invention, for example, location information of a group may vary during communication. In order to implement broadcast to groups, the CBC needs to know variations in location information of a corresponding group.

As shown in Fig.2a, a method for updating location information is provided illustratively in an embodiment of the present invention, wherein the method for updating location information is used for a communication system employing cell broadcast service, and the communication system comprises a cell broadcast centre. The method is as follows.

210. a first network apparatus receives a first message which indicates an update for the terminal location information of a terminal or indicates an update for the group location information of the group where the terminal is located.

For example, the first network apparatus can include a MSC/VLR or SGSN, and the first message comprises a location updating request, routing area updating request, or a cell updating request.

For example, terminal location information can include one or more of cell information, location area information, and routing area information of the terminal.

For example, the first network apparatus can pre-set group location information of the group where the terminal is located, or the first network apparatus can pre-acquire group location information of the group where the terminal is located from other network apparatus. When terminal location information of the terminal has changed, the first network apparatus can receive a first message sent by the terminal, indicating the updating of terminal location information of the terminal, or indicating the updating of group location information of the group where the terminal is located.

In another embodiment of the present invention, group location information pre-set in the first network apparatus can be null.

Optionally, in an embodiment of the present invention, the first message can further include terminal location information of the terminal to indicate the updating of terminal location information of the terminal, or the updating of group location information of the group where the terminal is located.

215. According to the indication of the first message, the first network apparatus acquires the group location information of the group where the terminal is located.

For example, the group location information can include one or more of a cell information list, a location area list, or a routing area list.

According to the first message, the first network apparatus determines the group location information of the group where the terminal is located. For example, the first network apparatus can acquire group location information of the group corresponding to the terminal after terminal location information updated from other network apparatus, e.g, a HLR; or the first network apparatus can acquire, from its local database, the group location information of the group corresponding to the terminal after terminal location information is updated.

Group location information represents corresponding locations when broadcasting to all terminals in the group. For example, it can include any one of a cell information list, a location area list, and a routing area list. In the case that the location information of the terminal is not included in group location information of the group where the terminal is located, when the group location information is updated, it may be necessary to add location information of the terminal into the group location information. In the case that the location information of a terminal has already been included in group location information of the group where the terminal is located, when the group location information is updated, out-of-date location information of the terminal might to be removed. For example, when a terminal moves from LA1 to LA2, if all terminals in the group where the terminal is located are not within LA1, LA1 must be deleted from group location information of that group.

220. The first network apparatus sends the updated group location information of the group where the terminal is located, to the cell broadcast centre.

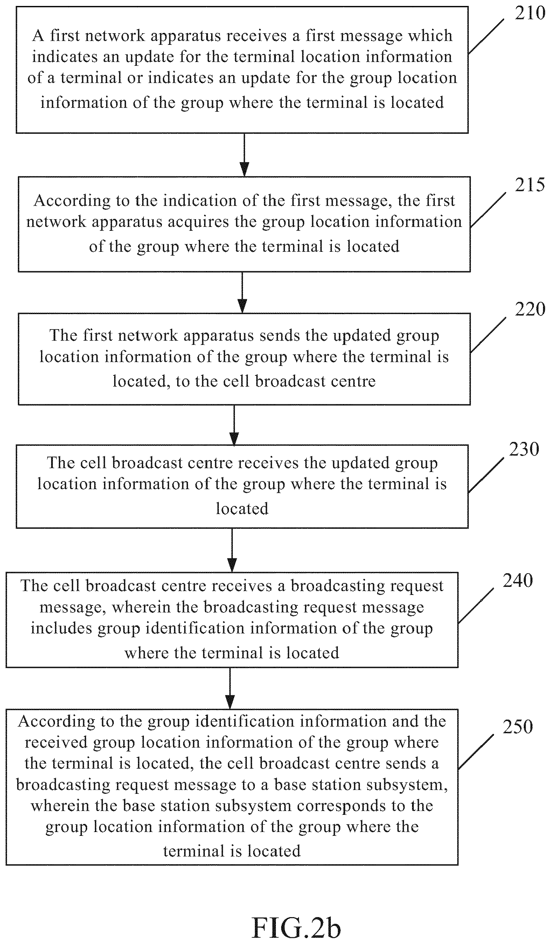

The first network apparatus sends group location information of the group corresponding to the updated terminal location information, to the cell broadcast centre. In another illustrative embodiment of the present invention, as shown in Fig.2b, the method may further include the following steps.

230. The cell broadcast centre receives the updated group location information of the group where the terminal is located.

Using the received updated group location information of the group where the terminal is located, the cell broadcast centre can update group location information of the group where the terminal is located previously stored in the cell broadcast centre.

240. The cell broadcast centre receives a broadcasting request message, wherein the broadcasting request message comprises group identification information of the group where the terminal is located.

For example, other network apparatus, e.g., a CBE or a MTC server, may send a broadcasting request message to the cell broadcast centre, wherein the broadcasting request message comprises group identification information of the group where the terminal is located, indicating that the cell broadcast centre broadcasts to the group where the terminal is located.

250. According to the group identification information and the received group location information of the group where the terminal is located, the cell broadcast centre sends a broadcasting request message to a base station subsystem, wherein the base station subsystem corresponds to the group location information of the group where the terminal is located.

Using the received group location information of the group where the terminal is located, the cell broadcast centre can determine the base station subsystem in the group where the terminal is located. As the group location information can be any one of a cell information list, a location area list, and a routing area list, the base station subsystem corresponding to the cell information list, the location area list, or the routing area list can be determined according to the group location information.

For example, according to updated group location information of the group where the terminal is located sent by the first network apparatus, the cell broadcast centre can indicate a corresponding base station subsystem to transmit a broadcast in a corresponding cell after receiving a cell broadcast message for the group.

In this embodiment, the first network apparatus, according to the indication of a first message received, acquires updated group location information of the group where the terminal is located, and sends the updated group location information to the cell broadcast centre. Correspondingly, the cell broadcast centre can acquire the updated group location information of the group where the terminal is located, so that the cell broadcast centre can indicate the base station subsystem to broadcast in a corresponding cell according to the group location information of the group after receiving the broadcast message for the group.

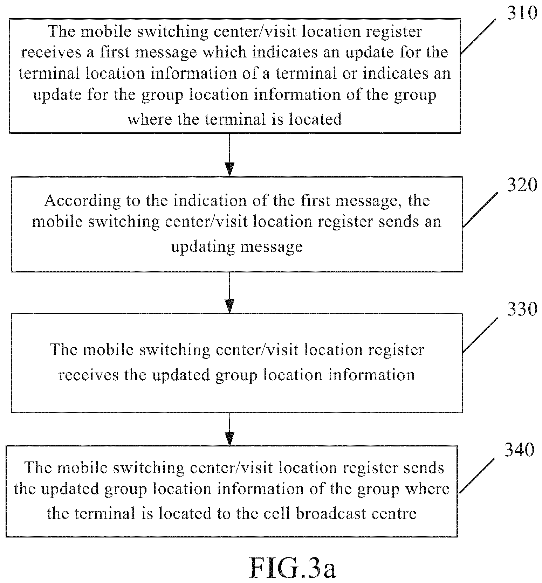

As shown in Fig.3a, for a first network apparatus which is a mobile switching center/visit location register, a method for updating location information is provided illustratively in an embodiment of the present invention, wherein the method for updating location information is used for a communication system employing cell broadcast service, and the communication system comprises a cell broadcast centre. The method is as follows.

310. The mobile switching center/visit location register receives a first message which indicates an update for the terminal location information of a terminal or indicates an update for the group location information of the group where the terminal is located.

For example, the terminal location information can include one of cell information, location area information, and routing area information of the terminal.

In this embodiment, for example, the first message can be one of a location updating request message of the terminal, a routing updating request message of the terminal, or a cell updating request message of the terminal. The first message can be sent to the mobile switching center/visit location register by the terminal.

In another embodiment of the present invention, the first message can further include terminal location information of the terminal.

320. According to the indication of the first message, the mobile switching center/visit location register sends an updating message.

For example, the updating message can be a location area updating message, or a cell updating message. Certainly, the updating message also can be other message. The updating message can include the terminal location information of the terminal

For example, the first message indicates to update terminal location information of the terminal, and the mobile switching center/visit location register sends the updating message to a home location register. After receiving the first message, the home location register carries out location area or cell updating of the terminal, updates group location information of the group where the terminal is located, and sends the updated group location information of the group where the terminal is located to the mobile switching center/visit location register.

Optionally, in another embodiment of the present invention, after receiving the first message, the home location register can determine whether a change has occurred in group location information of the group where the terminal is located, if it is determined that a change has occurred in the group location information, the home location register then sends new group location information to the mobile switching center/visit location register.

330. The mobile switching center/visit location register receives the updated group location information.

For example, the updated group location information can be carried by one of a cell updating response message, a location area updating response message, and a routing area updating response message. Certainly, it also can be carried by other message.

The home location register receives the updating message sent by the mobile switching center/visit location register, queries group location information of the group where the terminal is located, and sends the updated group location information to the mobile switching center/visit location register.

Further, in another embodiment of the present invention, after receiving a querying message, the home location register determines whether the change occurred in terminal location information of the terminal may cause a change occurred in group location information of the group where the terminal is located. For example, if group location information of the group where the terminal is located is {LA1, LA2, LA3, LA4} before the terminal location information of the terminal is changed, and if terminal location information of the terminal has changed to LA3 from LA2, no change occurred in group location information of the group where the terminal is located. If terminal location information of the terminal has changed to LA5 from LA2, a change occurred in group location information of the group where the terminal is located. At that point, group location information of the group where the terminal is located may be {LA1, LA2, LA3, LA4, LA5} (there are other terminals in the group located in terminal location area LA2) or {LA1, LA2, LA3, LA4, LA5} (there is no other terminal in the group located in terminal location area LA2). If the home location register determines that a change has occurred in group location information of the group where the terminal is located, it sends the updated group location information to the mobile switching center/visit location register.

There are many ways to carry group location information. For example, group location information can be carried on a cell updating response message, a location area updating response message, a routing area updating response message, or other message and sent to the mobile switching center/visit location register by the home location register.

340. The mobile switching center/visit location register sends the updated group location information of the group where the terminal is located to the cell broadcast centre.

After receiving updated group location information of the group where the terminal is located, the cell broadcast centre can update group location information of the group where the terminal is located stored thereon.

In this embodiment, the mobile switching center/visit location register can, according to the indication of the received first message, acquire group location information of the group where the terminal is located, and send it to the cell broadcast centre. Therefore, the cell broadcast centre can broadcast to the group according to the updated group location information of the terminal.

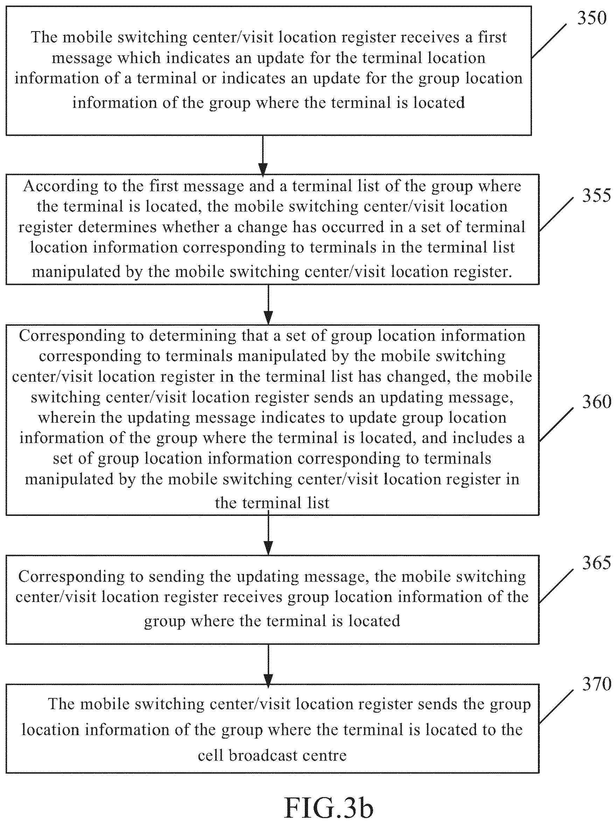

As shown in Fig.3b, for a first network apparatus which is a mobile switching center/visit location register, a method for updating location information is provided illustratively in another embodiment of the present invention, wherein the method for updating location information is used for a communication system employing cell broadcast service, and the communication system comprises a cell broadcast centre. The method is as follows.

350. The mobile switching center/visit location register receives a first message which indicates an update for the terminal location information of a terminal or indicates an update for the group location information of the group where the terminal is located.

For example, the terminal location information can include one of cell information, location area information, and routing area information of the terminal.

In this embodiment, for example, the first message can be one of a location updating request message of the terminal, a routing updating request message of the terminal, or a cell updating request message of the terminal. The first message can be sent to the mobile switching center/visit location register by the terminal. The first message can include the terminal location information of the terminal

355. According to the first message and a terminal list of the group where the terminal is located, the mobile switching center/visit location register determines that whether a change has occurred in a set of terminal location information corresponding to terminals in the terminal list manipulated by the mobile switching center/visit location register.

The mobile switching center/visit location register can store a terminal list of the group where the terminal is located, or the home location register can store a terminal list of the group where the terminal is located, the mobile switching center/visit location register can acquire the terminal list of the group where the terminal is located through information interaction with the home location register.

Each of terminals contained in the terminal list has its terminal location information recorded therein, some of which may be identical. However, a set of terminal location information refers to a set containing terminal location information of terminals, each of the terminal contained is different with each others. Below, a description of terminal location information set will be given illustratively.

Terminals in a group may be distributed to a number of mobile switching centers/visit location registers, for example, group 1 comprises four terminals MS1 to MS4, wherein MS1 is located in location area LA1, MS2 is located in location area LA2, and MS1, MS2 resist in a first mobile switching center/visit location register; MS3 is located in location area LA3, MS4 is located in location area LA4, and MS3, MS4 resist in a second mobile switching center/visit location register. As to group 1, a set of terminal location information stored in the first mobile switching center/visit location register can be {LA1, LA2}, and a set of terminal location information stored in the second mobile switching center/visit location register can be {LA3, LA4}.

The mobile switching center/visit location register can recognize which group the terminal belongs to by receiving the first message, and acquire a terminal list of that group. From the terminal list of the group, the mobile switching center/visit location register can determine terminals manipulated by the mobile switching center/visit location register in the terminal list, and consequently determine whether the set of terminal location information corresponding to terminals in the terminal list manipulated by the mobile switching center/visit location register has changed.

When the mobile switching center/visit location register determine that a set of terminal location information of terminals in the terminal list manipulated by the mobile switching center/visit location register has changed, the mobile switching center/visit location register can determine that group location information of the group where the terminal is located has changed.

360. Corresponding to determining that a set of group location information corresponding to terminals manipulated by the mobile switching center/visit location register in the terminal list has changed, the mobile switching center/visit location register sends an updating message, wherein the updating message indicates to update group location information of the group where the terminal is located, and comprises a set of group location information corresponding to terminals manipulated by the mobile switching center/visit location register in the terminal list.

The mobile switching center/visit location register sends the updating message to the home location register. The updating message indicates the home location register to update group location information of the group where the terminal is located. Because the home location register also has terminal list information of the group where the terminal is located stored thereon, the home location register can update group location information of the group where the terminal is located using the set of terminal location information contained in the updating message according to the terminal list information.

The updating message may be a MAP Update Group Location Info message or other message. Further, in another embodiment of the present invention, the updating message can also include identification information of the mobile switching center/visit location register

365. Corresponding to sending the updating message, the mobile switching center/visit location register receives group location information of the group where the terminal is located.

The group location information can be carried by a cell updating response message, a location area updating response message, a routing area updating response message, or other message.

Further, in another embodiment of the present invention, after receiving a querying message, the home location register determines whether the change occurred in terminal location information of the terminal may cause a change occurred in group location information of the group where the terminal is located. For example, if group location information of the group where the terminal is located is {LA1, LA2, LA3, LA4} before the terminal location information of the terminal is changed, and if terminal location information of the terminal has changed to LA3 from LA2, no change occurred in group location information of the group where the terminal is located. If terminal location information of the terminal has changed to LA5 from LA2, a change has occured in group location information of the group where the terminal is located. At that point, group location information of the group where the terminal is located can be {LA1, LA2, LA3, LA4, LA5} or {LA1, LA2, LA3, LA4, LA5}. If the home location register determines that a change has occurred in group location information of the group where the terminal is located, it sends the group location information to the mobile switching center/visit location register.

There are many ways to carry group location information. For example, group location information can be carried on a cell updating response message, a location area updating response message, a routing area updating response message, or other message and sent to the mobile switching center/visit location register by the home location register.

370. The mobile switching center/visit location register sends the group location information of the group where the terminal is located to the cell broadcast centre.

After receiving group location information of the group where the terminal is located, the cell broadcast centre can update group location information of the group where the terminal is located.

In this embodiment, the mobile switching center/visit location register can, according to the indication of the received first message, determine whether terminal location information of terminals manipulated by the mobile switching center/visit location register has changed, and further determine whether group location information of the group where the terminal is located has changed. When the mobile switching center/visit location register determines that group location information of the group where the terminal is located has changed, the mobile switching center/visit location register can indicate to update group location information of the group where the terminal is located, and consequently acquire group location information of the group where the terminal is located, i.e., the updated group location information. After acquiring updated group location information, the mobile switching center/visit location register sends it to the cell broadcast centre. Therefore, the cell broadcast centre can broadcast to the group according to the updated group location information.

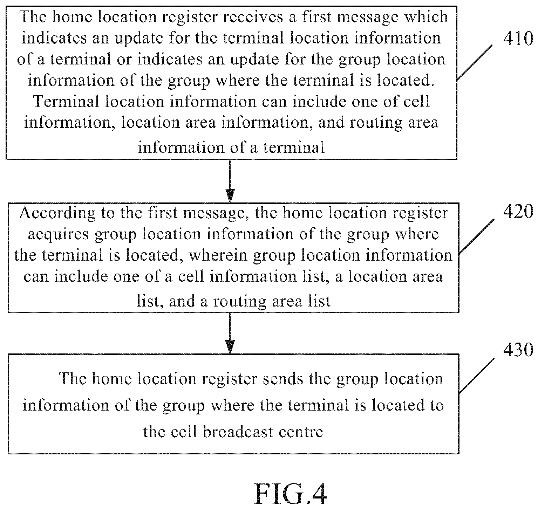

As shown in Fig.4, for a first network apparatus which is a home location register, a method for updating location information is provided illustratively in an embodiment of the present invention, wherein the method for updating location information is used for a communication system employing cell broadcast service, and the communication system comprises a cell broadcast centre. The method is as follows.

410. The home location register receives a first message which indicates an update for the terminal location information of a terminal or indicates an update for the group location information of the group where the terminal is located. Terminal location information can include one of cell information, location area information, and routing area information of a terminal.

The first message can be a new message, or an existed message. For example, the first message can be one of a location updating message, a cell updating message, and a routing updating message sent by a mobile switching center/visit location register or a service GPRS supporting node.

In another embodiment of the present invention, the first message can further include terminal location information of the terminal.

420. According to the first message, the home location register acquires group location information of the group where the terminal is located, wherein group location information can include one of a cell information list, a location area list, and a routing area list.

According to the indication of the first message, the home location register determines that group location information of the group where the terminal is located needs to be updated and acquires group location information of the group where the terminal is located, i.e., the updated group location information. For example, the home location register can acquire group location information of a group corresponding to updated terminal location information of the terminal from a database thereof.

Group location information represents corresponding locations when broadcasting to all terminals in the group. For example, it can include any one of a cell information list, a location area list, and a routing area list. When group location information of the group where the terminal is located does not contain the location information of the terminal, the location information of the terminal can be updated to group location information through updating.

430. The home location register sends the group location information of the group where the terminal is located to the cell broadcast centre.

The home location register sends group location information of the group corresponding to the updated terminal location information, to the cell broadcast centre. According to group location information of the group where the terminal is located that is sent by the home location register, the cell broadcast centre can indicate a corresponding base station subsystem to broadcast in corresponding cells after receiving a cell broadcast message for the group.

Further, in another embodiment of the present invention, after acquiring group location information of the group where the terminal is located, the home location register determines whether a change occurred in terminal location information of the terminal has caused a change occurred in group location information of the group where the terminal is located. If the home location register determines that a change has occurred in group location information of the group where the terminal is located, it sends the group location information to the mobile switching center/visit location register.

In this embodiment, the home location register, according to the indication of a first message received, acquires group location information of the group where the terminal is located, and sends the group location information to the cell broadcast centre. Correspondingly, the cell broadcast centre can acquire the update of the group location information of the group where the terminal is located, so that the cell broadcast centre can indicate the base station subsystem to broadcast in a corresponding cell according to the group location information of the group after receiving the broadcast message for the group.

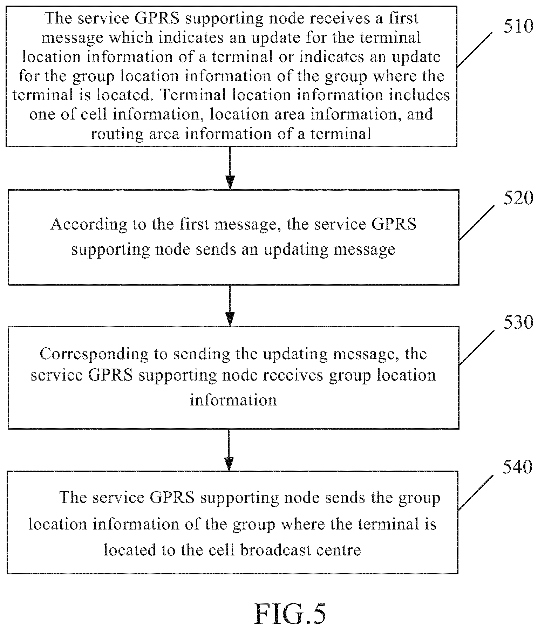

As shown in Fig.5, for a first network apparatus which is a service GPRS supporting node, a method for updating location information is provided illustratively in an embodiment of the present invention, wherein the method for updating location information is used for a communication system employing cell broadcast service, and the communication system comprises a cell broadcast centre. The method is as follows.

510. The service GPRS supporting node receives a first message which indicates an update for the terminal location information of a terminal or indicates an update for the group location information of the group where the terminal is located. Terminal location information comprises one of cell information, location area information, and routing area information of a terminal.

In this embodiment, for example, the first message can be one of a location updating request message of the terminal, a routing updating request message of the terminal, or a cell updating request message of the terminal. The first message can be sent to the service GPRS supporting node by the terminal. The first message can include the terminal location information of the terminal.

520. According to the first message, the service GPRS supporting node sends an updating message.

The updating message can be a location updating message, a cell updating message, or other message. The updating message can include terminal location information of the terminal, for example, routing area information of the terminal.

According to the first message indicating to update the terminal location information of a terminal, or indicating to update the group location information of the group where the terminal is located, the service GPRS supporting node sends an updating message to a home location register. Consequently, the home location register acquires group location information of the group where the terminal is located, and sends group location information of the group where the terminal is located to a mobile switching center/visit location register.

530. Corresponding to sending the updating message, the service GPRS supporting node receives group location information.

The group location information can be carried by a cell updating response message, a location area updating response message, a routing area updating response message, or other message.

The home location register receives the updating message sent by the service GPRS supporting node, queries group location information of the group where the terminal is located, and sends the group location information to the service GPRS supporting node.

There are many ways to carry group location information. For example, group location information can be carried on a cell updating response message, a location area updating response message, a routing area updating response message, or other message and sent to the service GPRS supporting node by the home location register.

540. The service GPRS supporting node sends the group location information of the group where the terminal is located to the cell broadcast centre.

After receiving group location information of the group where the terminal is located, the cell broadcast centre can update group location information of the group where the terminal is located.

In this embodiment, the service GPRS supporting node can, according to the indication of the received first message, acquire group location information of the group where the terminal is located, and send it to the cell broadcast centre. Therefore, the cell broadcast centre can broadcast to the group according to the updated group location information of the terminal.

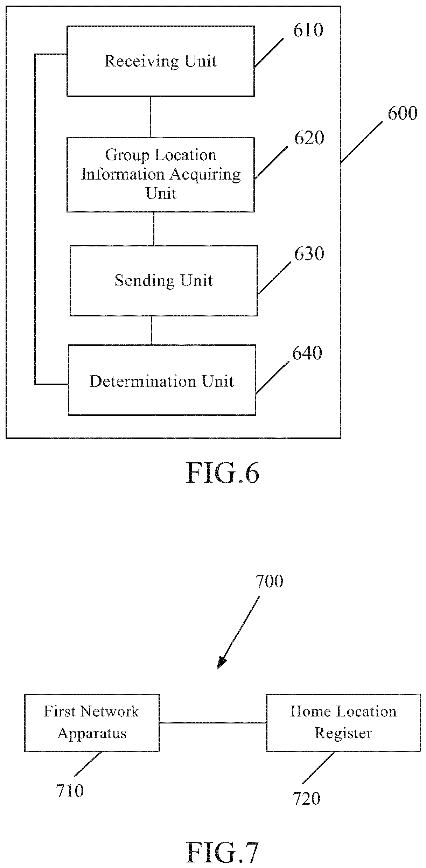

As shown in Fig.6, a first network apparatus 600 of an embodiment of the present invention is shown illustratively. The first network apparatus 600 can achieve all functions of the first network apparatus in the method for updating location information described above. The first network apparatus 600 can realize all functions of the first terminal described above in the form of software and/or hardware, for example, the first network apparatus 600 can include one or more processors to achieve all functions of the first network apparatus described above. For example, the first network apparatus 600 can include: a receiving unit 610, a group location information acquiring unit 620, and a sending unit 630.

The receiving unit 610 is used for receiving a first message which indicates an update for the terminal location information of a terminal or indicates an update for the group location information of the group where the terminal is located.

For example, the terminal location information can include one of cell information, location area information, and routing area information of the terminal.

The group location information acquiring unit 620 is used for according to the first message, acquiring the group location information of the group where the terminal is located, wherein the group location information comprises one of a cell information list, a location area list, and a routing area information list.

The sending unit 630 for sending the group location information of the group where the terminal is located, to the cell broadcast centre.

Further, in another embodiment of the present invention, the fist message comprises group identification information of the group where the terminal is located, wherein the group identification information indicates to query group location information of the group where the terminal is located.

Further, in still another embodiment of the present invention, the first network apparatus further comprises a determination unit 640.

The determination unit 640 is used for, according to the first message and a terminal list of the group where the terminal is located, determining whether a change has occurred in a set of terminal location information corresponding to terminals in the terminal list that are manipulated by the first network apparatus, wherein the first network apparatus comprises the terminal list of the group where the terminal is located.

The sending unit 630 is further used for, corresponding to determining that a change has occurred in a set of terminal location information corresponding to terminals in the terminal list that are manipulated by the first network apparatus, sending an updating message, wherein the updating message indicates to update group location information of the group where the terminal is located, and comprises a set of terminal location information corresponding to terminals in the terminal list that are manipulated by the first network apparatus.

The receiving unit 610 is further used for, corresponding to sending the updating message, receiving the group location information.

As shown in Fig.7, a communication system 700 is illustratively provided in an embodiment of the present invention. The communication system 700 comprises a first network apparatus 710 and a home location register 720. The first network apparatus 710 and the home location register 720 can achieve all functions of the first network apparatus and the home location register of the above method, respectively. Wherein, for particular implementment details of the first network apparatus and the home location register, a reference can be made to the above embodiment, which will not be described in detail herein.

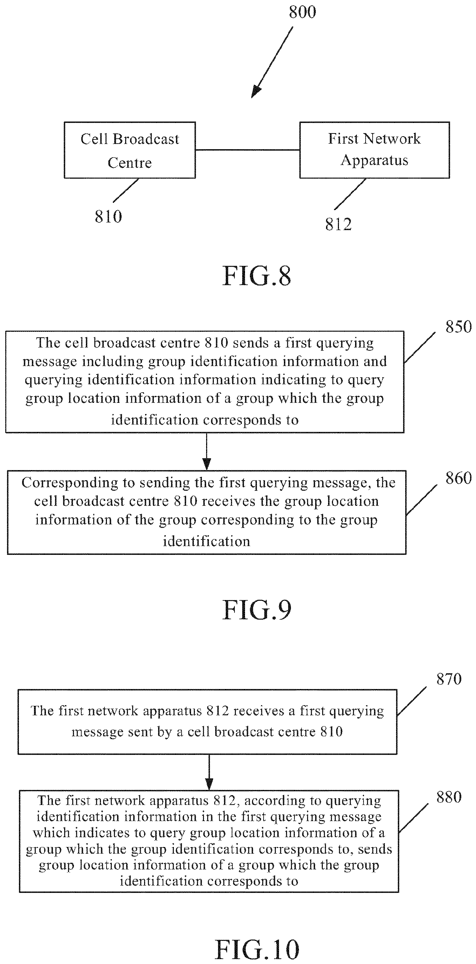

As shown in Fig.8, a communication system 800 is provided in an embodiment of the present invention illustratively. The communication system comprises a cell broadcast centre 810. As shown in Fig.9, the cell broadcast centre 810 is used to achieve the following steps.

850. The cell broadcast centre 810 sends a first querying message including group identification information and querying identification information indicating to query group location information of a group which the group identification corresponds to.

The group location information comprises one of a cell information list, a location area information list and a route area information list.

If group location information of the group is stored in a home location register, a mobile switching center/visit location register, or a service GPRS supporting node, the cell broadcast centre 810 can send the first querying message to the home location register, the mobile switching center/visit location register, or the service GPRS supporting node to query group location information of a group which the group identification corresponds to. Alternatively, if group location information of the group is stored in other network element, the cell broadcast centre 810 can send the first querying message to the other network element, to acquire group location information.

860. Corresponding to sending the first querying message, the cell broadcast centre 810 receives the group location information of the group corresponding to the group identification.

After receiving the first querying message, the home location register, the mobile switching center/visit location register, the service GPRS supporting node, or the other network element returns the group location information of the group which the group identification corresponds to the cell broadcast centre.

In this embodiment, the cell broadcast centre can send the first querying message, and acquire group location information of a group a group identification corresponds to, so that according to the group location information, the cell broadcast centre can indicate a base station subsystem to broadcast in cells of the group.

In another embodiment of the present invention, the communication 800 may further include a first network apparatus 812. The first network apparatus 812 can be one of the home location register, the mobile switching center/visit location register, and the service GPRS supporting node. As shown in Fig.10, the first network apparatus 812 can be used to achieve the following steps.

870. The first network apparatus 812 receives a first querying message sent by a cell broadcast centre 810.

880. The first network apparatus 812, according to querying identification information in the first querying message which indicates to query group location information of a group which the group identification corresponds to, sends group location information of a group which the group identification corresponds to.

Group location information of a group can be stored in a home location register, a mobile switching center/visit location register, or a service GPRS supporting node, so that. Alternatively, the home location register, the mobile switching center/visit location register, or the service GPRS supporting node can send group location information to the cell broadcast centre 810. If group location information of a group which the group identification corresponds to is not stored in a mobile switching center/visit location register or a service GPRS supporting node, the mobile switching center/visit location register or the service GPRS supporting node can send a first querying message to a home location register to acquire group location information of the group.

As shown in Fig.11, a communication system 900 is provided in an embodiment of the present invention illustratively. The communication system comprises a cell broadcast centre 910. Based on the embodiment shown in Fig.8, as shown in Fig.12, the cell broadcast centre 910 may further achieve the following steps.

950. The cell broadcast centre 910 sends a second querying message including group identification information and querying identification information indicating to query a terminal list of a group which the group identification corresponds to.

Correspondingly, in embodiments shown in Fig.8 and Fig.11, the querying identification information can be used to indicate whether to query group location information of a group which the group identification corresponds to or query a terminal list of that group.

The group location information comprises one of a cell information list, a location area information list and a route area information list.

For example, the querying identification information may be formatted into a 2-bits value, such as "00" to indicate a query of group location information of a group, "01" to indicate a query of a terminal list of a group, "10" to indicate a query of both group location information and a terminal list of a group.

If the home location register, the mobile switching center/visit location register, or the service GPRS supporting node has a terminal list of the group stored therein, the cell broadcast centre 810 can send a second querying message to the home location register, the mobile switching center/visit location register, or the service GPRS supporting node to query a terminal list of a group which the group identification corresponds to. Alternatively, if the terminal list of the group is stored in other network element, the cell broadcast centre 810 can send the second querying message to the other network element, to acquire the terminal list.

960. Corresponding to sending the second querying message, the cell broadcast centre 910 receives the terminal list of the group corresponding to the group identification.

After receiving the second querying message of the cell broadcast centre, the home location register, the mobile switching center/visit location register, the service GPRS supporting node, or another network element recognizes that the querying identification information indicates to query the terminal list of the group. Further, after receiving the terminal list, according to the terminal list, the cell broadcast centre 910 may acquire terminal location information of each terminal in the terminal list, respectively. Thus, the cell broadcast centre 910 can broadcast to the group according to the terminal list of the group.

In this embodiment, the cell broadcast centre can send a second querying message indicating what to query to the terminal list of a group, acquire the terminal list of a group corresponding to a group identification, thereby the cell broadcast centre can acquire terminal location information of each terminal according to the terminal list, and instruct a base station subsystem to broadcast in cells of the group according to the terminal location information.

In another embodiment of the present invention, the communication 900 may further include a first network apparatus 912. The first network apparatus 912 can be one of the home location register, the mobile switching center/visit location register, and the service GPRS supporting node. As shown in Fig. 13, the first network apparatus 912 can be used to achieve the following steps.

970. The first network apparatus 912 receives a second querying message sent by a cell broadcast centre 910.

980. The first network apparatus 912, according to querying identification information of the second querying message indicating a query of a terminal list of a group a group identification corresponds to, sends the terminal list of a group which the group identification corresponds to.

The terminal list of the group can be stored in a home location register, a mobile switching center/visit location register, a service GPRS supporting node, so that the home location register, the mobile switching center/visit location register, or the service GPRS supporting node can send the terminal list of the group to the cell broadcast centre 910. Further, the home location register, the mobile switching center/visit location register, or the service GPRS supporting node can send group location information to the cell broadcast centre 910. If the mobile switching center/visit location register or the service GPRS supporting node does not store a terminal list of a group which the group identification corresponds to, the mobile switching center/visit location register or the service GPRS supporting node can send a second querying message to the home location register to acquire the terminal list of the group.

As shown in Fig.14, a cell broadcast centre 1000 of an embodiment of the present invention is shown illustratively. The cell broadcast centre 1000 can achieve all functions of the cell broadcast centre of the communication system in the embodiments shown in Fig.8 and Fig. 11. For example, the cell broadcast centre 1000 can achieve all functions of the cell broadcast centre of the communication system in the embodiments shown in Fig.8 and Fig.11 in the form of software and/or hardware. For example, the cell broadcast centre 1000 may include one or more processors to achieve all functions of the cell broadcast centre of the communication system in the embodiments shown in Fig.8 and Fig.11. For example, the cell broadcast centre 1000 may include a sending unit 1010 and a receiving unit 1020.

The sending unit 1010 is used for sending a first querying message containing group identification information and querying identification information indicating the querying to the group location information of the group corresponding to the group identification, wherein the group location information comprises one of a cell information list, a location area list, and a routing area information list;

The receiving unit 1020 is used for corresponding to sending the first querying message, receiving the group location information of the group corresponding to the group identification.

Further, in another embodiment of the present invention, the sending unit 1010 is further used for sending a second querying message including group identification information and querying identification information indicating to query the terminal list of the group which the group identification corresponds to. The receiving unit 1020 is further used for corresponding to sending the second querying message, receiving the terminal list of the group corresponding to the group identification.

As shown in Fig. 15, a first network apparatus 1100 of an embodiment of the present invention is shown illustratively. The first network apparatus 1100 can achieve all functions of the first network apparatus of the communication system in the embodiments shown in Fig.8 and Fig.11. The first network apparatus 1100 can realize all functions of the first network apparatus of the communication system in the embodiments shown in Fig.8 and Fig.11 in the form of software and/or hardware. For example, the first network apparatus 1100 may include one or more processors to achieve all functions of the first network apparatus of the communication system in the embodiments shown in Fig.8 and

Fig.11. For example, the first network apparatus 1100 can include: a receiving unit 1110 and a sending unit 1120.

The receiving unit 1110 is used for receiving a first querying message containing group identification information and querying identification information indicating the querying to the group location information of the group corresponding to the group identification, wherein the group location information comprises one of a cell information list, a location area list, and a routing area information list.

The sending unit 1120 is used for according to the querying identification information indicating the querying to the group location information of the group corresponding to the group identification in the first querying message, sending the group location information of the group corresponding to the group identification.

Wherein, the first network apparatus can be one of the home location register, the mobile switching center/visit location register, and the service GPRS supporting node.

Further, in another embodiment of the present invention, the receiving unit 1110 is further used for receiving a second querying message including group identification information and querying identification information indicating to query the terminal list of the group which the group identification corresponds to.

The receiving unit 1020 is further used for, according to the querying identification information indicating to query the terminal list of the group which the group identification corresponds to in the second querying message, sending the terminal list of the group which the group identification corresponds to.

Further, because there may be changes in location information of terminals, in order to achieve broadcasting to terminals, a cell broadcast centre needs to know the changes of the location information of a corresponding terminal. Accordingly, those skilled in the art may understand that appropriate modifications can be made to the group location information updating scheme for a group in the embodiments above to adapt it to the updating of terminal location information of a terminal.

From the description of the above embodiments, those skilled in the art can clearly understand that the invention can be implemented in a manner of software and an essential general-purpose hardware platform. Of course, it can be implemented by hardware, however, the former is preferred in most cases. Based upon such understanding, the technical solutions of the invention or a part thereof contributing to the prior art can essentially be embodied in the form of a software product, which can be stored in a storage medium, which comprises several instructions to cause a computer device (which may be a personal computer, a server, a network apparatus, etc.) to perform the methods according to the respective embodiments of the invention. The storage medium described above comprises: flash memory, a mobile hard disk, a Read-Only Memory (ROM), a Random Access Memory (RAM), a magnetic disk or an optical disk and various media capable of storing program codes.

In several embodiments provided in the present application, it should be understood that the disclosed system, device, and method may be implemented in other ways. For example, the described device embodiments are merely exemplary. For example, the unit division is merely logical function division and can be other divisions in actual implementation. For example, multiple units or components can be combined or integrated into another system, or some features can be ignored or not performed. Furthermore, the shown or discussed coupling or direct coupling or communication connection may be accomplished through indirect coupling or communication connection between some interfaces, devices or units in an electrical form, a mechanical form, or in other forms.

Units described as separate components may be or may not be physically separated. Components shown as units may be or may not be physical units, that is, may be integrated or distributed to multiple network units. Some or all of the units may be selected to achieve the objective of the solution of the embodiment according to actual requirements.

In addition, various functional units according to each embodiment of the present invention may be integrated in one processing module or may exist as separate physical units, or two or more units may also be integrated in one unit. The integrated module may be implemented through hardware, or may also be implemented in a form of a software functional module. When the integrated module is implemented in the form of the software functional module and sold or used as a separate product, the integrated module may be stored in a computer readable storage medium.

The above are merely exemplary embodiments of the present invention, but the idea of the present invention is not limited herein. Any change or replacement that can be easily figured out by persons skilled in the art within the technical scope disclosed by the present invention shall be covered by the idea of the present invention. Therefore, the protection scope of the present invention shall be defined by the claims.

## Claims

1. A method for updating location information, wherein the method is used for a communication system (700) employing cell broadcast service and the communication system (700) comprises a cell broadcast center (110), the method comprising:
receiving, by a first network apparatus (600; 710; 812; 912; 1100), a first message which indicates an update for the terminal location information of a terminal or indicates an update for the group location information of the group where the terminal is located (210);
acquiring, according to the first message, by the first network apparatus, the group location information of the group where the terminal is located (215);
sending, by the first network apparatus, the group location information of the group where the terminal is located, to the cell broadcast center (110) such that the cell broadcast center (110) indicates a base station subsystem corresponding to the group, where the terminal is located, to transmit a broadcast in a cell corresponding to the group, where the terminal is located, according to the group location information of the group, where the terminal is located; wherein the group location information comprises one of a cell information list, a location area information list and a route area information list (220).

2. The method according to claim 1, wherein the first message comprises group identification information of the group where the terminal is located, wherein the group identification information indicates to query group location information of the group where the terminal is located.

3. The method according to claim 1 or 2, wherein the first network apparatus is a mobile switching center/visit location register;
the process of according to the first message, the first network apparatus acquires the group location information of the group where the terminal is located comprises:
according to the first message, the first network apparatus sends an updating message, the updating message indicating the updating of terminal location information of the terminal;
corresponding to sending the updating message, the first network apparatus receives the group location information.

4. The method according to claim 1 or 2, wherein the first network apparatus is a mobile switching center/visit location register;
the process of according to the first message, the first network apparatus acquires the group location information of the group where the terminal is located comprises:
according to the indication of the first message and a terminal list of the group where the terminal is located, the first network apparatus determines whether a set of group location information corresponding to terminals manipulated by the first network apparatus in the terminal list has changed, wherein the first network apparatus comprises the terminal list of the group where the terminal is located;
if the change has occurred, the first network apparatus sends an updating message, the updating message indicates to update the group location information of the group where the terminal is located, and comprises a set of group location information corresponding to terminals manipulated by first network apparatus in the terminal list;
corresponding to sending the updating message, the first network apparatus receives the group location information.

5. The method according to claim 1 or 2, wherein the first network apparatus is home location register;
the first message is one of a location area updating message and a cell updating message.

6. The method according to claim 1 or 2, the first network apparatus is a service GPRS supporting node;
the process of according to the first message, the first network apparatus acquires the group location information of the group where the terminal is located comprises:
corresponding to receiving the first message, the first network apparatus sends an updating message of the terminal;
the first network apparatus receives the group location information of the group where the terminal is located.

7. The method according to claim 1, wherein the method further comprises:
the cell broadcast center receives the group location information of the group where the terminal is located (230);
the cell broadcast center receives a broadcasting request message, wherein the broadcasting request message comprises group identification information of the group where the terminal is located (240);
according to the group identification information and the group location information of the group where the terminal is located received by the cell broadcast center, the cell broadcast center sends the broadcasting request message to a base station subsystem (250).

8. A first network apparatus (600), comprising:
a receiving unit (610), configured to receive a first message which indicates an update for the terminal location information of a terminal or indicates an update for the group location information of the group where the terminal is located;
a group location information acquiring unit (620), configured to, according to the first message, acquire the group location information of the group where the terminal is located, wherein the group location information comprises one of a cell information list, a location area list, and a routing area information list;
a sending unit (630), configured to send the group location information of the group where the terminal is located, to the cell broadcast center such that the cell broadcast center indicates a base station subsystem corresponding to the group where the terminal is located to transmit a broadcast in a cell corresponding to the group where the terminal is located according to the group location information of the group where the terminal is located.

9. The first network apparatus (600) according to claim 8, wherein the first message comprises group identification information of the group where the terminal is located, wherein the group identification information indicates to query group location information of the group where the terminal is located.

10. The first network apparatus (600) according to claim 8 or 9, wherein the first network apparatus further comprises:
a determination unit (640), configured to determine whether a change has occurred in a set of terminal location information corresponding to terminals in the terminal list that are manipulated by the first network apparatus according to the first message and a terminal list of the group where the terminal is located, wherein the first network apparatus comprises the terminal list of the group where the terminal is located;
the sending unit is further configured to determine that a change has occurred in a set of terminal location information corresponding to terminals in the terminal list that are manipulated by the first network apparatus, send an updating message, wherein the updating message indicates to update group location information of the group where the terminal is located, and comprises a set of terminal location information corresponding to terminals in the terminal list that are manipulated by the first network apparatus;
the receiving unit is further configured to, corresponding to the process of sending the updating message, receive the group location information.

11. A cell broadcast center (1000), **characterized by** comprising:
a sending unit (1010), configured to send to a first network apparatus (600;710;812;912;1100) a first querying message containing group identification information and query identification information indicating the querying to the group location information of the group corresponding to the group identification, wherein the group identification information identifies a group where a terminal is located, wherein the group location information comprises one of a cell information list, a location area list, and a routing area information list;
a receiving unit (1020), configured to, corresponding to sending the first querying message, receive the group location information of the group corresponding to the group identification,
wherein the cell broadcast center indicates a base station subsystem corresponding to the group where the terminal is located to transmit a broadcast in a cell corresponding to the group where the terminal is located according to the group location information of the group where the terminal is located.

12. The cell broadcast center (1000) according to claim 11, wherein the sending unit (1010) is further configured to send a second querying message including the group identification information and the querying identification information indicating to query the terminal list of the group the group identification information corresponds to;
the receiving unit (1020) is further configured to, corresponding to sending the second querying message, receive the terminal list of the group corresponding to the group identification.

13. A first network apparatus (1100), **characterized by** comprising:
a receiving unit (1110), configured to receive from a cell broadcast center a first querying message containing group identification information and query identification information indicating the querying to the group location information of the group corresponding to the group identification, wherein the group identification information identifies a group where a terminal is located, wherein the group location information comprises one of a cell information list, a location area list, and a routing area information list;
a sending unit (1120), configured to, according to the querying identification information indicating the querying to the group location information of the group corresponding to the group identification in the first querying message, send the group location information of the group corresponding to the group identification to the cell broadcast center, such that the cell broadcast center indicates a base station subsystem corresponding to the group where the terminal is located to transmit a broadcast in a cell corresponding to the group where the terminal is located according to the group location information of the group where the terminal is located.

14. The first network apparatus (1100) according to claim 13, wherein the receiving unit (1110) is further configured to receive a second querying message including the group identification information and the query identification information indicating to query the terminal list of the group the group identification information corresponds to;
the sending unit (1120) is further configured to, according to the querying identification information indicating to query the terminal list of the group which the group identification corresponds to in the second querying message, send the terminal list of the group which the group identification corresponds to.

## Patentansprüche

1. Verfahren zum Aktualisieren von Standortinformationen, wobei das Verfahren für ein Kommunikationssystem (700) verwendet wird, das einen Cell Broadcast Dienst verwendet, und das Kommunikationssystem (700) ein Cell Broadcast Center (110) umfasst, wobei das Verfahren umfasst:
Empfangen einer ersten Nachricht durch eine erste Netzwerkvorrichtung (600; 710; 812; 912; 1100), die eine Aktualisierung für die Endgeräte-Standortinformationen eines Endgeräts oder eine Aktualisierung für die Gruppen-Standortinformationen der Gruppe angibt, in der sich das Endgerät befindet (210);
Erfassen der Gruppenstandortinformationen der Gruppe, in der sich das Endgerät befindet (215), gemäß der ersten Nachricht durch die erste Netzwerkvorrichtung;
Senden der Gruppenstandortinformationen der Gruppe, in der sich das Endgerät befindet, durch die erste Netzwerkvorrichtung an das Cell Broadcast Center (110), so dass das Cell Broadcast Center (110) ein Basisstationssubsystem anzeigt, das der Gruppe entspricht, in der sich das Endgerät befindet, um eine Übertragung in einer Zelle zu übertragen, die der Gruppe entspricht, in der sich das Endgerät befindet, gemäß den Gruppenstandortinformationen der Gruppe, in der sich das Endgerät befindet; wobei die Gruppenstandortinformationen eine Zelleninformationsliste oder
eine Standortsinformationsliste oder eine Routenbereichsinformationsliste (220) umfassen.

2. Verfahren nach Anspruch 1, wobei die erste Nachricht Gruppenidentifikationsinformationen der Gruppe umfasst, in der sich das Endgerät befindet, wobei die Gruppenidentifikationsinformationen anzeigen, dass sie Gruppenstandortinformationen der Gruppe abfragen, in der sich das Endgerät befindet.

3. Verfahren nach Anspruch 1 oder 2, wobei die erste Netzwerkvorrichtung ein mobiles Vermittlungszentrum/Besuchsortregister ist;
der Prozess, gemäß der ersten Nachricht, wobei die erste Netzwerkvorrichtung die Gruppenstandortinformation der Gruppe, in der sich das Endgerät befindet, erfasst, umfasst:
gemäß der ersten Nachricht sendet die erste Netzwerkvorrichtung eine Aktualisierungsnachricht, wobei die Aktualisierungsnachricht die Aktualisierung der Endgerätestandortinformationen des Endgeräts anzeigt;
entsprechend dem Senden der Aktualisierungsnachricht, empfängt das erste Netzwerkgerät die Gruppenstandortinformationen.

4. Verfahren nach Anspruch 1 oder 2, wobei die erste Netzwerkvorrichtung ein mobiles Vermittlungszentrum/Besuchsortregister ist;
Der Prozess, gemäß der ersten Nachricht, wobei die erste Netzwerkvorrichtung die Gruppenstandortinformation der Gruppe, in der sich das Endgerät befindet, erfasst, umfasst:
gemäß der Anzeige der ersten Nachricht und einer Endgeräteliste der Gruppe, in der sich das Endgerät befindet, die erste Netzwerkvorrichtung bestimmt, ob sich ein Satz von Gruppenstandortinformationen, die den von der ersten Netzwerkvorrichtung manipulierten Endgeräten in der Endgeräteliste entsprechen, geändert hat, wobei die erste Netzwerkvorrichtung die Endgeräteliste der Gruppe umfasst, in der sich das Endgerät befindet;
wenn die Änderung eingetreten ist, sendet die erste Netzwerkvorrichtung eine Aktualisierungsnachricht, wobei die Aktualisierungsnachricht anzeigt, die Gruppenstandortinformationen der Gruppe, in der sich das Endgerät befindet, zu aktualisieren, und einen Satz von Gruppenstandortinformationen umfasst, die den von der ersten Netzwerkvorrichtung in der Endgeräteliste manipulierten Endgeräten entsprechen;
entsprechend dem Senden der Aktualisierungsnachricht, empfängt die erste Netzwerkvorrichtung die Gruppenstandortinformationen.

5. Verfahren nach Anspruch 1 oder 2, wobei die erste Netzwerkvorrichtung ein Heimatortsregister ist;
die erste Nachricht ist eine Aktualisierungsnachricht für den Standortbereich oder eine Aktualisierungsnachricht für Zellen.

6. Verfahren nach Anspruch 1 oder 2, wobei die erste Netzwerkvorrichtung ein Serving GPRS Support Node ist;
der Prozess, gemäß der ersten Nachricht, wobei die erste Netzwerkvorrichtung die Gruppenstandortinformation der Gruppe, in der sich das Endgerät befindet, erfasst, umfasst:
entsprechend dem Empfangen der ersten Nachricht, sendet die erste Netzwerkvorrichtung eine Aktualisierungsnachricht des Endgeräts;
die erste Netzwerkvorrichtung empfängt die Gruppenstandortinformation der Gruppe, in der sich das Endgerät befindet.

7. Verfahren nach Anspruch 1, wobei das Verfahren ferner umfasst:
das Cell Broadcast Center empfängt die Gruppenstandortinformationen der Gruppe, in der sich das Endgerät befindet (230);
das Cell Broadcast Center empfängt eine Übertragungsanforderungsnachricht, wobei die Übertragungsanforderungsnachricht Gruppenidentifikationsinformationen der Gruppe umfasst, in der sich das Endgerät befindet (240);
gemäß den Gruppenidentifikationsinformationen und den Gruppenstandortinformationen der Gruppe, in der sich das Endgerät befindet, die von dem Cell Broadcast Center empfangen werden, sendet das Cell Broadcast Center die Übertragungsanforderungsnachricht an ein Basisstationssubsystem (250).

8. Eine erste Netzwerkvorrichtung (600), umfassend:
eine Empfangseinheit (610), die zum Empfangen einer ersten Nachricht ausgelegt ist, die eine Aktualisierung für die Endgerätestandortinformationen eines Endgeräts anzeigt oder eine Aktualisierung für die Gruppenstandortinformationen der Gruppe anzeigt, in der sich das Endgerät befindet;
eine Gruppenstandortinformationserfassungseinheit (620), die zum Erfassen der Gruppenstandortinformationen der Gruppe, in der sich das Endgerät befindet, gemäß der ersten Nachricht ausgelegt ist, wobei die Gruppenstandortinformationen eine Zelleninformationsliste oder eine Ortsbereichsliste oder eine Routingbereichsinformationsliste umfassen;
eine Sendeeinheit (630), die zum Senden der Gruppenstandortinformationen der Gruppe, in der sich das Endgerät befindet, an das Cell Broadcast Center ausgelegt ist, so dass das Cell Broadcast Center ein Basisstationssubsystem anzeigt, das der Gruppe entspricht, in der sich das Endgerät befindet, um eine Übertragung in einer Zelle zu übertragen, die der Gruppe entspricht, in der sich das Endgerät befindet, gemäß den Gruppenstandortinformationen der Gruppe, in der sich das Endgerät befindet.

9. Die erste Netzwerkvorrichtung (600) nach Anspruch 8, wobei die erste Nachricht Gruppenidentifikationsinformationen der Gruppe umfasst, in der sich das Endgerät befindet, wobei die Gruppenidentifikationsinformationen anzeigen, dass sie Gruppenstandortinformationen der Gruppe abfragen, in der sich das Endgerät befindet.

10. Die erste Netzwerkvorrichtung (600) nach Anspruch 8 oder 9, wobei die erste Netzwerkvorrichtung ferner umfasst:
eine Bestimmungseinheit (640), die zum Bestimmen ausgelegt ist, ob eine Änderung in einem Satz von Endgeräte-Standortinformationen stattgefunden hat, die Endgeräten in der Endgeräteliste entsprechen, die von der ersten Netzwerkvorrichtung gemäß der ersten Nachricht und einer Endgeräteliste der Gruppe, in der sich das Endgerät befindet, manipuliert werden, wobei die erste Netzwerkvorrichtung die Endgeräteliste der Gruppe umfasst, in der sich das Endgerät befindet;
die Sendeeinheit ferner zum Bestimmen ausgelegt ist, dass eine Änderung in einem Satz von Endgeräte-Standortinformationen stattgefunden hat, die Endgeräten in der Endgeräte-Liste entsprechen, die durch die erste Netzwerkvorrichtung manipuliert werden, Senden einer Aktualisierungsnachricht, wobei die Aktualisierungsnachricht anzeigt, die Gruppenstandortinformationen der Gruppe, in der sich das Endgerät befindet, zu aktualisieren, und einen Satz von Endgeräte-Standortinformationen umfasst, die den Endgeräten in der Endgeräte-Liste entsprechen, die durch die erste Netzwerkvorrichtung manipuliert werden;
die Empfangseinheit ist ferner zum Empfangen der Gruppenstandortinformationen entsprechend dem Prozess des Sendens der Aktualisierungsnachricht ausgelegt.

11. Cell Broadcast Center (1000), **dadurch gekennzeichnet, dass** es umfasst:
eine Sendeeinheit (1010), die zum Senden einer ersten Abfragenachricht ausgelegt ist, die Gruppenidentifikationsinformationen und Abfrageidentifikationsinformationen enthält, die das Abfragen an die Gruppenstandortinformationen der Gruppe entsprechend der Gruppenidentifikation anzeigen, an eine erste Netzwerkvorrichtung (600; 710; 812; 912; 1100), wobei die Gruppenidentifikationsinformationen eine Gruppe identifizieren, in der sich ein Endgerät befindet, wobei die Gruppenstandortinformationen eine Zelleninformationsliste oder eine Standortbereichsliste oder eine RoutingBereichsinformationsliste umfassen;
eine Empfangseinheit (1020), die zum Empfangen der Gruppenstandortinformation der Gruppe, die der Gruppenidentifikation entspricht, entsprechend dem Senden der ersten Abfragenachricht ausgelegt ist,
wobei das Cell Broadcast Center ein Basisstationssubsystem anzeigt, das der Gruppe entspricht, in der sich das Endgerät befindet, um eine Übertragung in einer Zelle zu übertragen, die der Gruppe entspricht, in der sich das Endgerät befindet, gemäß den Gruppenstandortinformationen der Gruppe, in der sich das Endgerät befindet.

12. Cell Broadcast Center (1000) nach Anspruch 11, wobei die Sendeeinheit (1010) ferner zum Senden einer zweiten Abfragenachricht ausgelegt ist, die die Gruppenidentifikationsinformationen und die Abfrageidentifikationsinformationen enthält, die anzeigen, die Endgeräteliste der Gruppe abzufragen, der die Gruppenidentifikationsinformationen entsprechen;
die Empfangseinheit (1020) ist ferner zum Empfangen der Endgeräteliste der Gruppe, die der Gruppenidentifikation entspricht, entsprechend dem Senden der zweiten Abfragenachricht ausgelegt.

13. Eine erste Netzwerkvorrichtung (1100), **dadurch gekennzeichnet, dass** sie umfasst: eine Empfangseinheit (1110), die zum Empfangen von einem Cell Broadcast Center einer ersten Abfragenachricht ausgelegt ist, die Gruppenidentifikationsinformationen und Abfrageidentifikationsinformationen enthält, die das Abfragen an die Gruppenstandortinformationen der Gruppe entsprechend der Gruppenidentifikation anzeigen, wobei die Gruppenidentifikationsinformationen eine Gruppe identifizieren, in der sich ein Endgerät befindet, wobei die Gruppenstandortinformationen eine Zelleninformationsliste oder eine Ortsbereichsliste oder eine Routingbereichsinformationsliste umfassen;
eine Sendeeinheit (1120), die, gemäß der Abfrageidentifikationsinformation, die die Abfrage an die Gruppenstandortinformation der Gruppe entsprechend der Gruppenidentifikation in der ersten Abfragenachricht, zum Senden der Gruppenstandortinformationen der Gruppe entsprechend der der Gruppenidentifikation an das Cell Broadcast Center ausgelegt ist, so dass das Cell Broadcast Center ein Basisstationssubsystem anzeigt, das der Gruppe entspricht, in der sich das Endgerät befindet, um eine Übertragung in einer Zelle zu übertragen, die der Gruppe entspricht, in der sich das Endgerät befindet, gemäß den Gruppenstandortinformationen der Gruppe, in der sich das Endgerät befindet.

14. Die erste Netzwerkvorrichtung (1100) nach Anspruch 13, wobei die Empfangseinheit (1110) ferner zum Empfangen einer zweiten Abfragenachricht ausgelegt ist, die die Gruppenidentifikationsinformationen und die Abfrageidentifikationsinformationen enthält, die anzeigen, die Endgeräteliste der Gruppe abzufragen, der die Gruppenidentifikationsinformationen entsprechen;
die Sendeeinheit (1120) ist ferner gemäß den Abfrageidentifikationsinformationen, die anzeigen, die Endgeräteliste der Gruppe abzufragen, der die Gruppenidentifikation in der zweiten Abfragenachricht entspricht, ausgelegt zum Senden der Endgeräteliste der Gruppe, der die Gruppenidentifikation entspricht.

## Revendications

1. Procédé pour mettre à jour des informations de localisation, dans lequel le procédé est utilisé pour un système de communication (700) employant un service de diffusion cellulaire et le système de communication (700) comprend un centre de diffusion cellulaire (110), le procédé consistant :
à recevoir, au moyen d'un premier appareil de réseau (600 ; 710; 812; 912; 1100), un premier message qui indique une mise à jour des informations de localisation de terminal d'un terminal ou indique une mise à jour des informations de localisation de groupe du groupe dans lequel le terminal est localisé (210) ;
à acquérir, en fonction du premier message, au moyen du premier appareil de réseau, les informations de localisation de groupe du groupe dans lequel le terminal est localisé (215) ;
à envoyer, au moyen du premier appareil de réseau, les informations de localisation de groupe du groupe dans lequel le terminal est localisé, au centre de diffusion cellulaire (110) de telle sorte que le centre de diffusion cellulaire (110) indique un sous-système de station de base correspondant au groupe, dans lequel le terminal est localisé, en fonction des informations de localisation de groupe du groupe dans lequel le terminal est localisé ; dans lequel les informations de localisation de groupe comportent une liste d'informations de cellule et/ou une liste d'informations de zone de localisation et/ou une liste d'informations de zone de route (220).

2. Procédé selon la revendication 1, dans lequel le premier message comporte des informations d'identification de groupe du groupe dans lequel le terminal est localisé, dans lequel les informations d'identification de groupe indiquent de demander des informations de localisation de groupe du groupe dans lequel le terminal est localisé.

3. Procédé selon la revendication 1 ou 2, dans lequel le premier appareil de réseau est un centre de commutation du service des mobiles/registre de localisation des visiteurs ; le processus selon lequel, en fonction du premier message, le premier appareil de réseau acquiert les informations de localisation de groupe du groupe dans lequel le terminal est localisé, comprend les étapes suivantes :
en fonction du premier message, le premier appareil de réseau envoie un message de mise à jour, le message de mise à jour indiquant la mise à jour d'informations de localisation de terminal du terminal ;
de manière correspondante à l'envoi du message de mise à jour, le premier appareil de réseau reçoit les informations de localisation de groupe.

4. Procédé selon la revendication 1 ou 2, dans lequel le premier appareil de réseau est un centre de commutation du service des mobiles/registre de localisation des visiteurs ; le processus selon lequel, en fonction du premier message, le premier appareil de réseau acquiert les informations de localisation de groupe du groupe dans lequel le terminal est localisé, comprend les étapes suivantes :
en fonction de l'indication du premier message et d'une liste de terminaux du groupe dans lequel le terminal est localisé, le premier appareil de réseau détermine si un ensemble d'informations de localisation de groupe correspondant à des terminaux manipulés par le premier appareil de réseau dans la liste de terminaux a changé, dans lequel le premier appareil de réseau comprend la liste de terminaux du groupe dans lequel le terminal est localisé ;
si le changement a eu lieu, le premier appareil de réseau envoie un message de mise à jour, le message de mise à jour indique s'il faut mettre à jour les informations de localisation de groupe du groupe dans lequel le terminal est localisé, et comprend un ensemble d'informations de localisation de groupe correspondant à des terminaux manipulés par le premier appareil de réseau dans la liste de terminaux ;
de manière correspondante à l'envoi du message de mise à jour, le premier appareil de réseau reçoit les informations de localisation de groupe.

5. Procédé selon la revendication 1 ou 2, dans lequel le premier appareil de réseau est un registre des abonnés locaux ;
le premier message est un message de mise à jour de zone de localisation et/ou un message de mise à jour de cellule.

6. Procédé selon la revendication 1 ou 2, dans lequel le premier appareil de réseau est un noeud de prise en charge de GPRS de service ;
le processus selon lequel, en fonction du premier message, le premier appareil de réseau acquiert les informations de localisation de groupe du groupe dans lequel le terminal est localisé, comprend les étapes suivantes :
de manière correspondante à la réception du premier message, le premier appareil de réseau envoie un message de mise à jour du terminal ;
le premier appareil de réseau reçoit les informations de localisation de groupe du groupe dans lequel le terminal est localisé.

7. Procédé selon la revendication 1, dans lequel le procédé comprend en outre les étapes suivantes :
le centre de diffusion cellulaire reçoit les informations de localisation de groupe du groupe dans lequel le terminal est localisé (230) ;
le centre de diffusion cellulaire reçoit un message de demande de radiodiffusion, dans lequel le message de demande radiodiffusion comporte des informations d'identification de groupe du groupe dans lequel le terminal est localisé (240) ;
en fonction des informations d'identification de groupe et des informations de localisation de groupe du groupe dans lequel le terminal est localisé, reçues par le centre de diffusion cellulaire, le centre de diffusion cellulaire envoie le message de demande de radiodiffusion à un sous-système de station de base (250).

8. Premier appareil de réseau (600) comprenant :
une unité de réception (610), configurée pour recevoir un premier message qui indique une mise à jour des informations de localisation de terminal d'un terminal ou indique une mise à jour des informations de localisation de groupe du groupe dans lequel le terminal est localisé ;
une unité d'acquisition (620) d'informations de localisation de groupe configurée pour, en fonction du premier message, à acquérir les informations de localisation de groupe du groupe dans lequel le terminal est localisé, dans lequel les informations de localisation de groupe comportent une liste d'informations de cellule et/ou une liste d'informations de zone de localisation et/ou une liste d'informations de zone de route ;
une unité d'envoi (630) configurée pour envoyer les informations de localisation de groupe du groupe dans lequel le terminal est localisé, au centre de diffusion cellulaire de telle sorte que le centre de diffusion cellulaire indique un sous-système de station de base correspondant au groupe dans lequel le terminal est localisé, pour transmettre une diffusion dans une cellule correspondant au groupe dans lequel le terminal est localisé en fonction des informations de localisation de groupe du groupe dans lequel le terminal est localisé.

9. Premier appareil de réseau (600) selon la revendication 8, dans lequel le premier message comporte des informations d'identification de groupe du groupe dans lequel le terminal est localisé, dans lequel les informations d'identification de groupe indiquent de demander des informations de localisation de groupe du groupe dans lequel le terminal est localisé.

10. Premier appareil de réseau (600) selon la revendication 8 ou 9, dans lequel le premier appareil de réseau comprend en outre :
une unité de détermination (640), configurée pour déterminer si un changement a eu lieu dans un ensemble d'informations de localisation de terminal correspondant à des terminaux dans la liste de terminaux qui sont manipulés par le premier appareil de réseau en fonction du premier message et d'une liste de terminaux du groupe dans lequel le terminal est localisé, dans lequel le premier appareil de réseau comprend la liste de terminaux du groupe dans lequel le terminal est localisé ;
l'unité d'envoi est en outre configurée pour déterminer qu'un changement a eu lieu dans un ensemble d'informations de localisation de terminal correspondant à des terminaux dans la liste de terminaux qui sont manipulés par le premier appareil de réseau, pour envoyer un message de mise à jour, dans lequel le message de mise à jour indique de mettre à jour des informations de localisation de terminal correspondant à des terminaux dans la liste de terminaux qui sont manipulés par le premier appareil de réseau ;
l'unité de réception est en outre configurée, de manière correspondant au processus d'envoi du message de mise à jour, pour recevoir les informations de localisation de groupe.

11. Centre de diffusion cellulaire (1000) **caractérisé en ce qu'**il comprend :
une unité d'envoi (1010), configurée pour envoyer à un premier appareil de réseau (600; 710; 812; 912; 1100) un premier message de demande contenant des informations d'identification de groupe et des informations d'identification de demande indiquant la demande pour les informations de localisation de groupe du groupe correspondant à l'identification de groupe, dans lequel les informations d'identification de groupe identifient un groupe dans lequel un terminal est localisé, dans lequel les informations de localisation de groupe comportent une liste d'information de cellule et/ou une liste de zone de localisation et/ou une liste d'informations de zone de routage ;
une unité de réception (1020), configurée, de manière correspondante à l'envoi du premier message de demande, pour recevoir les informations de localisation de groupe du groupe correspondant à l'identification de groupe,
dans lequel le centre de diffusion cellulaire indique un sous-système de station de base correspondant au groupe dans lequel le terminal est localisé, pour transmettre une diffusion dans une cellule correspondant au groupe dans lequel le terminal est localisé en fonction des informations de localisation de groupe du groupe dans lequel le terminal est localisé.

12. Centre de diffusion cellulaire (1000) selon la revendication 11, dans lequel l'unité d'envoi (1010) est en outre configurée pour envoyer un second message de demande comportant les informations d'identification de groupe et les informations d'identification de demande indiquant de demander la liste de terminaux du groupe auquel les informations d'identification de groupe correspondent ;
l'unité de réception (1020) est en outre configurée, de manière correspondante à l'envoi du second message de demande, pour recevoir la liste de terminaux du groupe correspondant à l'identification de groupe.

13. Premier appareil de réseau (1100), **caractérisé en ce qu'**il comprend :
une unité de réception (1110), configurée pour recevoir, d'un centre de diffusion cellulaire, un premier message de demande contenant des informations d'identification de groupe et des informations d'identification de demande indiquant la demande pour les informations de localisation de groupe du groupe correspondant à l'identification de groupe, dans lequel les informations d'identification de groupe identifient un groupe dans lequel un terminal est localisé, dans lequel les informations de localisation de groupe comportent une liste d'information de cellule et/ou une liste de zone de localisation et/ou une liste d'informations de zone de routage ;
une unité d'envoi (1120), configurée, en fonction des informations d'identification de demande indiquant la demande pour les informations de localisation de groupe du groupe correspondant à l'identification de groupe dans le premier message de demande, pour envoyer les informations de localisation de groupe du groupe correspondant à l'identification de groupe au centre de diffusion cellulaire de telle sorte que le centre de diffusion cellulaire indique un sous-système de station de base correspondant au groupe dans lequel le terminal est localisé pour transmettre une diffusion dans une cellule correspondant au groupe dans lequel le terminal est localisé en fonction des informations de localisation de groupe du groupe dans lequel le terminal est localisé.

14. Premier appareil de réseau (1100) selon la revendication 13, dans lequel l'unité de réception (1110) est en outre configurée pour recevoir un second message de demande comportant les informations d'identification de groupe et les informations d'identification de demande indiquant de demander la liste de terminaux du groupe auquel les informations d'identification de groupe correspondent ;
l'unité d'envoi (1120) est en outre configurée, en fonction des informations d'identification de demande indiquant de demander la liste de terminaux du groupe auquel l'identification de groupe correspond, dans le second message de demande, pour envoyer la liste de terminaux du groupe auquel l'identification de groupe correspond.
